# EUROPEAN PATENT APPLICATION

(11) **EP 1 580 754 A1**
(43) Date of publication of application: **28.09.2005**
(21) Application number: 05005952.6
(22) Date of filing: 18.03.2005
(51) Int. Cl.: G11B 27/034, G11B 27/10, G11B 27/32

(54) **Method and apparatus for editing recorded program using virtual file system and file structure**

(30) Priority: 22.03.2004 KR 2004019462
(71) Applicant: LG ELECTRONICS INC., Seoul (KR)
(72) Inventor: Cho, Yong-Bum, Seoul (KR); Min, Hyun-Ki, Seongbuk-Gu Seoul (KR); Cho, Sung-Yean, Seoul (KR); Lee, Jeong-Woo, Bundang-gu, Seongnam-si, Gyeonggi-do 463 (KR); Joe, Moon-Jeung, Anyang Gyeonggi-Do (KR)
(74) Representative: Rupprecht, Kay

(57) **Abstract**

A method and apparatus for editing a recorded program using a virtual file system in a personal video recorder having a large capacity recording medium, and a file structure therefor are disclosed. The method for editing a recorded program using a virtual file system (VFS) includes dividing a program file recorded in a storage unit based on edition information provided by a user to edit the program, and generating one or more virtual files mapped to the divided program file based on the edition information. Efficiency of editing a program file is enhanced and users' request for editing variably can be met.

## Description

### BACKGROUND OF THE INVENTION

### 1. Field of the Invention

The present invention relates to management of a file of a recorded program (e.g., a television program broadcast) and, more particularly, to a method and apparatus for editing a recorded program using a virtual file system (VFS) of a device including a storage unit such as a personal video recorder (PVR), and to a file structure.

### 2. Description of the Background Art

In general, a VCR (Video Cassette Recorder) using a tape medium has been typically used to record analog broadcast signals.

Recently, however, with the advent of digital broadcasting with its many advantages over analog broadcasting, a multitude of new recording mediums, such as a digital VCR, a hard disk drive (HDD) recorder or a recording device using an optical disk, have been introduced. Of them, especially, the HDD recorder has an increased recording capacity of up to scores of giga bytes owing to the recent rapid development of technologies.

In addition, with digital broadcasting having commenced in full scale and digital TV receivers spreading, a recording medium having a new function of digitally storing audio and video information has also appeared, to meet diverse demands of users.

Unlike the VCR (Video Cassette Recorder) holding image signals in a magnetic tape, a personal video recorder (PVR), which is receiving much attention lately, has a hard disk drive as a storing medium in a set-top box or in a TV set and guarantees picture quality without a loss of information although recording and reproducing are performed continuously.

The PVR includes a CPU controlling recording and reproducing of a TV program, a memory chip (ROM) storing an operating system (OS) and reproduction software, and a large capacity hard disk drive, and reproduces a recorded program according to the same file reproduction method as that of a personal computer.

The PVR can randomly receive the latest broadcast reservation by using a telephone line and utilize it for a reserved recording. The procedure for setting the reserved recording is simple, namely, just selecting from a broadcast listing displayed on a screen.

However, since the recorded program can contain unwanted commercial advertisements portions, the digital video recorder typically provides a function allowing the user to easily edit out such unnecessary portions.

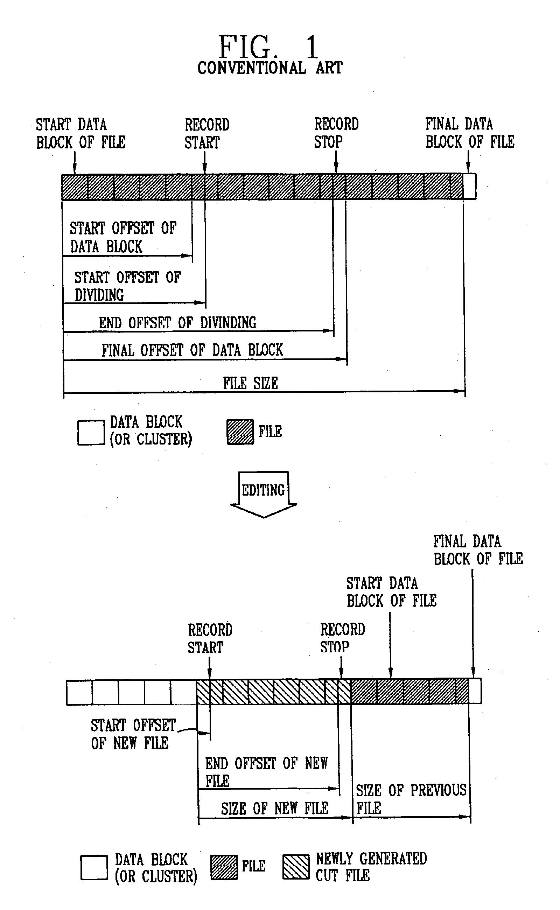

Figure 1 is an exemplary view of a method for editing a recorded TV program file in accordance with the conventional art.

As shown in Figure 1, in the conventional editing method in the PVR, the user can request editing with respect to a required portion of a program file while reproducing a recorded program. In this case, the corresponding program file can be divided into three parts to be processed.
1. Before a recording is started, existing data blocks are deleted so as to be used for recording a new program.
2. A data storage region of the hard disk drive spanning from a data block from which the edited recording will start to a data block at which the edited recording will be stopped is generated as a new file. The new file corresponds to a file of the portion requested to be edited by the user, which is allocated to the new (edited) program.
3. The data from the next data block following the data block at which the edited recording will stop to a final data block remain as an existing file on the hard disk. The existing file remains to be used when an editing is requested with respect to the same file.

The conventional PVR editing method is quite effective to remove an undesired commercial advertisement from a recorded program, and its editing speed is high.

However, the conventional PVR editing method has the following problems.

First, the previously recorded program file is deleted. Namely, when editing is performed with respect to the recorded program, the existing program is lost and the new program made up of only portions corresponding to the edited regions is created. Thus, the conventional editing method could be usable for deleting the undesired commercial advertisement portions of a recorded program, but because the portions other than the edited regions are deleted, editing cannot be performed subsequently using the original recorded program.

Second, in order to use the program file in a different program, the program file needs to be copied. This puts much load on the hard disk, making use of a hard disk of a limited capacity ineffective.

For example, when a DTV broadcast is recorded as a multimedia in a digital video recorder, it is stored at the size data of about 120Mb per 1 minute, which means generation of a new program by copying a multimedia file with such a large capacity to edit it inevitably lengthens time required for editing. In addition, while the multimedia file is being copied, much load is generated upon the hard disk of the digital video recorder. Therefore, copying of the multimedia file to edit it is very ineffective.

Third, even after the editing is performed to preserve only a program portion excluding the commercial advertisements on the hard disk, an unnecessary file can remain on the hard disk. For example, assuming that a recording reservation was made and a recording comprising the contents [commercial advertisement + program + commercial advertisement] has been recorded, then the user can select and edit a program region desired to be kept in order to delete the undesired commercial advertisements while reproducing the remaining portion of the recorded program. In this respect, however, a problem arises that a final commercial advertisement portion can still exist on the hard disk which has not been actually used the editing.

### SUMMARY OF THE INVENTION

Therefore, an object of the present invention is to provide a method and apparatus for editing a recorded program using a virtual file system (VFS) capable of enhancing the efficiency of editing a program file and satisfying users' diverse demands on editing by editing a program file in a personal video recorder (PVR) in such a manner that a program file recorded and stored in a storage unit is divided and virtual files corresponding to each divided part of the program file are generated and managed, and a file structure therefor.

To achieve these and other advantages and in accordance with the purpose of the present invention, as embodied and broadly described herein, there is provided a method for editing a recorded program using a virtual file system (VFS) comprising: dividing a program file recorded in a storage unit based on edition information provided by a user to edit the program; and generating a virtual file mapped to the divided program file based on the edition information.

To achieve the above object, there is also provided an apparatus for editing a recorded program using a virtual file system (VFS) comprising: a storage unit for storing a plurality of recorded or edited program files; an editing unit for dividing an arbitrary program file requested to be edited among the stored program files based on edition information with respect to the program file, and generating virtual files each mapped to the divided parts of the multimedia file, and a management unit for managing the storing and updating of the plurality of virtual files changed corresponding to editing or recording of the program file.

To achieve the above object, there is also provided a file structure comprising: an actual file layer for recording a plurality of actual files, a virtual file layer of a plurality of virtual files mapped to the plurality of actual files, and a virtual file system root layer for managing the plurality of virtual files.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a diagrammatic representation of a data file structure in a method for editing a program file in accordance with the conventional art;
Figure 2 is a schematic block diagram showing an apparatus for editing a recorded program by using a virtual file system (VFS) in accordance with the present invention;
Figure 3 is a diagrammatic representation of a file structure organization of a VFS in accordance with the present invention;
Figures 4A and 4B are diagrammatic representations of data file organizations showing a method for editing a recorded program file according to an editing request of a user;
Figure 5 is an exemplary view showing a VFS before/after editing a recorded program file in a PVR in accordance with the present invention; and
Figure 6 is a flow chart of a method for editing a recorded program using the VFS in accordance with the present invention.

### DETAILED DESCRIPTION OF THE INVENTION

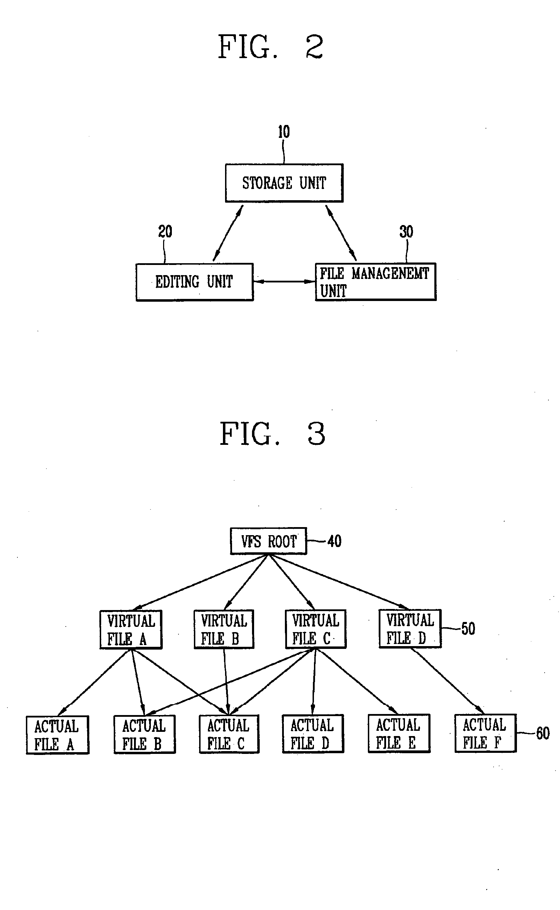

Figure 2 is a block diagram showing an apparatus for editing a recorded program by using a virtual file system (VFS) in accordance with the present invention.

As shown in Figure 2, the apparatus for editing a recorded program using a VFS includes a storage unit 10 storing a plurality of recorded or edited program files, an editing unit 20 dividing an arbitrary program file requested to be edited among the stored program files based on edition information with respect to the arbitrary program file and generating virtual files each mapped to the divided parts of the program file, and a management unit 30 managing the storing and updating of the information on the plurality of virtual files changed corresponding to editing or recording of the program file.

The storage unit 10 can be a hard disk drive (HDD). When the program file stored in the storage unit 10 is recorded, edited or reproduced, a progress status bar can be displayed on a screen. Also, in order to reflect edited content with respect to the program file, an on-screen display (OSD) can be displayed on the screen. For example, a user can select a semi-transparent menu on the OSD screen through key input of a remote controller and edit the program file. In this case, a key input unit of the remote controller, a dialog format on the OSD screen, an OSD font, OSD menu items, an OSD display form, or the like, used for designating an edition section can be designed variably.

Figure 3 is a diagrammatic representation of a file structure organization of a VFS in accordance with the present invention.

As shown in Figure 3, the structure of the VFS includes, an actual file layer 60 including a plurality of actual files generated by recording and editing, a virtual file layer 50 including a plurality of virtual files, at least one or more of the virtual files being mapped to the plurality of actual files, and a virtual file system root layer 40 for managing the plurality of virtual files.

The virtual files include at least one or more actual files, and actual files can be commonly included in the plurality of virtual files. The user does not need to consider how actual files of a lower layer are constructed.

When a new program is generated through recording or editing of a program in the PVR, new virtual files mapped to the new program (namely, actual files) are generated. When an arbitrary program is deleted, its corresponding virtual files are also deleted, and in this case, only the actual files which belong to the deleted virtual files and are not used by other virtual files are deleted. For example, if a virtual file 'C' is deleted, only the actual files 'D' and 'E', which are not used by other virtual files, are deleted.

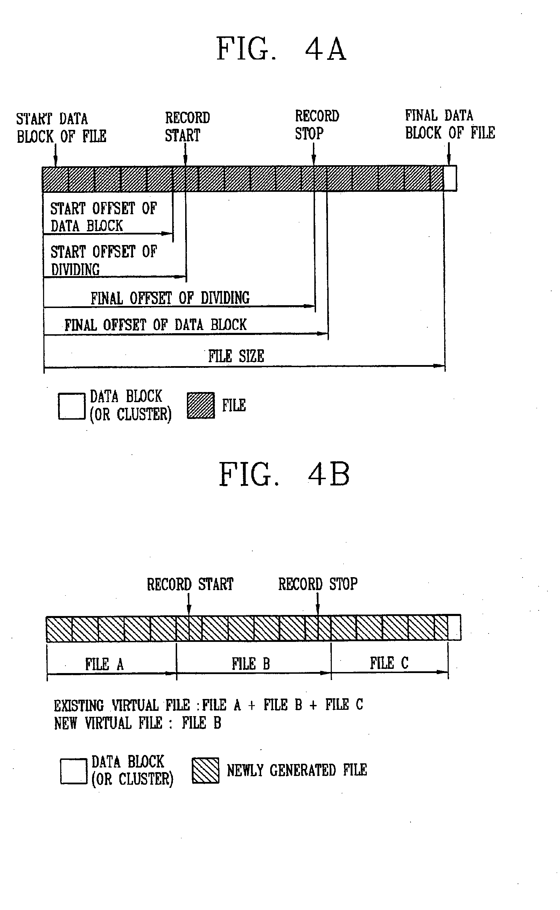

Figures 4A and 4B are diagrammatic representations of data file organizations showing a method for editing a recorded program file according to an editing request of a user.

As shown in Figures 4A and 4B, in the method for editing according to the file structure of the VFS, a program file, which has been recorded in units of data blocks in a storage unit based on edition information provided from a user, is divided. The edition information includes information on an offset interval of recording start point and offset interval of recording stop point, and the offset intervals are set through key inputting of an input unit such as a remote controller. Accordingly, the program can be selectively reproduced with respect to intervals designated according to the user's request. The reason for dividing the program file based on the data block is because the file is stored in units of data block in the large capacity storage unit such as the HDD.

After the offsets of the recording start point and the offset of the recording stop point are determined, the program file is divided in the following order.
1. The first file 'A' is divided into several data blocks, from a data block for starting the program file to a data block before starting recording.
2. The second file 'B' is divided into several data blocks, from a data block of starting recording to a data block for stopping the recording.
3. The third file 'C' is divided into several data blocks, from a data block following the data block for stopping the recording to a final data block.

Accordingly, the existing actual file belonging to the existing virtual file is divided into actual files A, B and C based on the edition information, and a new virtual file is generated mapped to the actual file 'B' according to the offset interval selected by the edition request of the user. For example, with reference to Figure 4B, the existing actual file is divided into the file 'A', the file 'B' and the file 'C' according to a request of edition. Herein, an existing virtual file has the file 'A', the file 'B' and the file 'C', and a new virtual file has the file 'B'.

After dividing the file, information on the new virtual files is updated. In this case, the actual file can be used by several virtual files, so information on the existing virtual files, which have used the actual file which had been divided according to the request for edition, is requested to be updated. For this purpose, in performing editing, information on the file prior to editing must be maintained (stored). After dividing of every file is finished, files are searched from the VFS root, information of the virtual files are all updated, and then, the file change information is deleted.

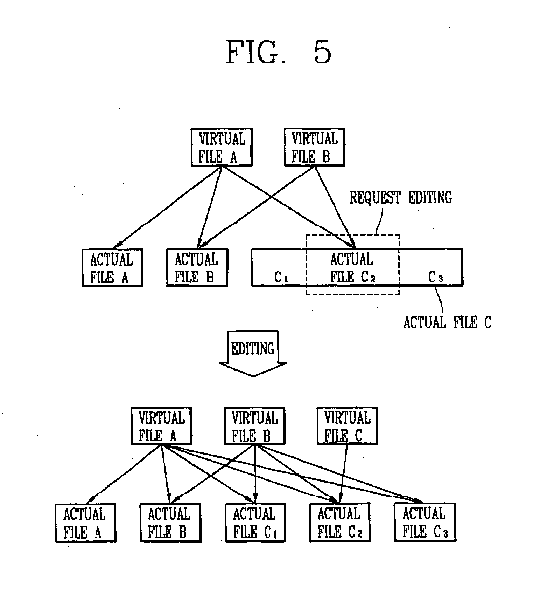

Figure 5 is an exemplary view showing a VFS before/after editing a recorded program file in a PVR in accordance with the present invention.

As shown in Figure 5, actual files 'A', 'B' and 'C' are mapped to a virtual file 'A' and actual files 'B' and 'C' are mapped to a virtual file 'B'. In this case, when a user request editing of the actual file 'C' among the actual files commonly mapped to the virtual files 'A' and 'B', the actual file 'C' is divided. Accordingly, the actual file 'C' is divided into an actual file 'C1', an actual file 'C2' and an actual file 'C3. File change information on the divided actual files C1, C2 and C3 are maintained (stored).

Thereafter, file searching is performed from the VFS root 210 based on the file change information to search for any virtual file which has used the actual file 'C' and then file information of any found virtual file is updated.

Finally, a virtual file 'C' is generated. In this case, the virtual file 'C' includes the actual file 'C2' which has been requested by the user to be edited.

In this manner, the VFS does not copy or generate the same program file on the hard disk in editing the program, whereby use of the limited hard disk storage capacity is minimized.

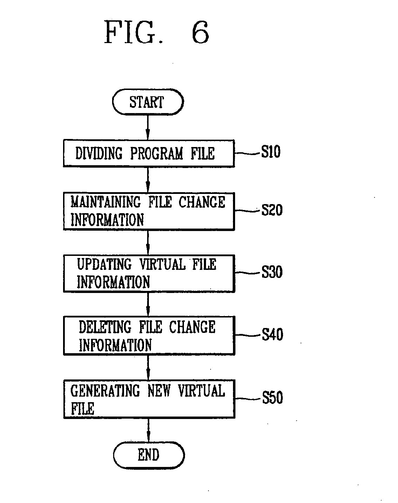

Figure 6 is a flow chart of a method for editing a recorded program using the VFS in accordance with the present invention.

As shown in Figure 6, the method for editing the recorded program using the VFS includes dividing a program file stored in the storage unit based on edition information provided by a user in order to edit the program file (step S10); maintaining (storing) file change information before/after editing with respect to the program file (step S20); updating virtual file information through overall searching (step S30); deleting the file change information (step S40); and generating a new virtual file mapped to the divided program file based on the edition information.

As so far described, the method and apparatus for editing a recorded program using the VFS and the file structure in accordance with the present invention have many advantages.

For example, first, by using the VFS, a new program is generated according to edition information while maintaining an original recorded program. Thus, the originally recorded program can be edited into a new program through cutting and merging the file variably according to a subsequent request for editing of it by a user.

Second, quick program file editing is supported because the VFS system does not copy an actual file while editing. Thus, because the editing is performed without copying a large quantity of multimedia file data, loading of to the hard disk drive can be minimized.

Third, management of the program file is simple and easy. In the VFS environment, one virtual file consists of several actual files. Thus, as to each program stored in the PVR, multimedia data can be reproduced, edited and deleted by using one virtual file. For example, when the user requests deletion of a program, the VFS searches for only the actual files which are not commonly used by other virtual files, and then deletes them. Thus, the developer of an upper layer environment does not need to consider how the actual files are constructed.

Fourth, in the VFS environment, one actual file can be used by several virtual files. Namely, when a program file is edited, it is not necessary to repeatedly store the same multimedia file data in the hard disk. Thus, the limited hard disk capacity of the digital video recorder can be effectively used.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A method for editing a recorded program using a virtual file system (VFS) comprising:
dividing a program file recorded in a storage unit based on edition information provided by a user to edit the program; and
generating a virtual file mapped to the divided program file based on the edition information.

2. The method of claim 1, further comprising:
maintaining or storing file change information with respect to the recorded program file before and after editing;
updating information of the virtual file according to the file change infomration through overall searching after the program file is divided; and
deleting the file change information.

3. The method of claim 1, wherein the edition information includes information on an offset interval for starting recording and an offset interval for stopping recording.

4. The method of claim 3, wherein one actual file is divided into three files based on the edition information, and the actual divided files selected according to a request for edition by a user are generated as new virtual files.

5. The method of claim 3, wherein the edition information includes the offset interval information set by key inputting via a remote controller.

6. The method of claim 1, wherein the program file is divided based on units of data blocks.

7. The method of claim 1, wherein the step of dividing the program file comprises:
dividing the program file from a first start data block of the program file to a data block before a data block for starting recording;
dividing the program file from the data block for starting the recording to a data block for stopping the recording; and
dividing the program file from a block following the block for stopping the recording to a final data block of the program file.

8. The method of claim 1, wherein the virtual file includes one or more actual files.

9. The method of claim 1, wherein the storage unit is a hard disk drive (HDD).

10. The method of claim 1, wherein when the program file stored in the storage unit is edited or reproduced, a progress status bar is displayed on a display screen.

11. The method of claim 1, wherein edited content with respect to the program file is displayed as an OSD (On-Screen Display) on a display screen.

12. An apparatus for editing a recorded program using a virtual file system (VFS), comprising:
a storage unit for storing a plurality of recorded or edited program files;
an editing unit for dividing an arbitrary program file requested to be edited among the stored program files based on edition information with respect to the program file, and generating a plurality of virtual files each mapped to divided parts of the multimedia file; and
a management unit for managing the storing and updating of the plurality of virtual files changed corresponding to editing or recording of the program file.

13. The apparatus of claim 12, wherein the edition information includes information on an offset interval for starting recording and an offset interval for stopping recording.

14. The apparatus of claim 12, wherein the storage unit is a hard disk drive (HDD).

15. A file structure comprising:
an actual file layer for recording a plurality of actual files;
a virtual file layer for a plurality of virtual files mapped to the plurality of actual files; and
a virtual file system root layer for managing the plurality of virtual files.

16. The file structure of claim 15, wherein the virtual files are generated by recording or editing a recorded program.

17. The file structure of claim 16, wherein upon deletion of a virtual file, among actual files mapped to virtual files only those actual files which are not mapped to other virtual files are deleted.
